(19) Europäisches Patentamt
European Patent Office
Office européen des brevets

(11) **EP 3 211 545 A1**

(12) **EUROPEAN PATENT APPLICATION**

(43) Date of publication:
**30.08.2017 Bulletin 2017/35**

(51) Int Cl.:
***G06F 17/30*** *(2006.01)*

(21) Application number: **16162500.9**

(22) Date of filing: **27.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.02.2016 IN 201641006630**

(71) Applicant: **Wipro Limited**
**560 035 Karnataka (IN)**

(72) Inventors:
• **VENKATARAMAN, Arthi**
**560047 Karnataka (IN)**
• **SAJU, Samson**
**560100 Karnataka (IN)**
• **SUBRAMANIAN, Tamilselvan**
**570076 Karnataka (IN)**

(74) Representative: **Finnegan Europe LLP**
**16 Old Bailey**
**London EC4M 7EG (GB)**

(54) **METHOD AND DEVICE FOR GENERATING AN OPTIMIZED RESULT SET**

(57) The present disclosure discloses a method and a device for generating an optimized result set, the method comprising receiving, by a computing unit, one or more queries from one or more users, extracting at least one keyword from each of the one or more queries, retrieving a Relative Information Measure (RIM) value associated with each of the at least one keyword, where the RIM value is determined using smoothened information gain for each of the at least one keyword, calculating a normalized value for each of the retrieved RIM value associated with each of the at least one keyword, determining a score for a plurality of solutions, based on the normalized value of each of the at least one keyword and the corresponding one or more keywords present in the plurality of solutions and generating a result set based on the score.

FIGURE 2

Description

**TECHNICAL FIELD**

The present disclosure relates to data retrieval techniques. More specifically but not exclusively, the present disclosure relates to a method for generating an optimized result set by retrieving data from one or more databases.

**BACKGROUND**

Data retrieval is commonly performed by a data retrieval system by obtaining data from one or more databases. A typical data retrieval system involves processing a query submitted by a user and retrieving results from one or more databases. The retrieved results are then displayed to the user. But, it is observed that, in the current scenario, the quality of the results displayed is irrelevant with respect to the input query. Irrelevant solutions to the queries may further confuse the user. For example, when a user inputs a query to find relevant solutions based on the entered query, different similarity measures are applied. In Question Answering (QA) systems, solutions to a query rely on different similarity measures to find the relevance of the query with information on QA database. Most of the similarity measures use different word level matching techniques to identify the most relevant solution. Existing techniques in this domain are Bag of words based matching, N-gram matching, and similarity measures like cosine similarity, Jacardian similarity etc. Word based matching techniques tend to fail since relevance cannot be decided based on the number of similar words. N-gram based methods are computationally very expensive and fail when order of the words change.

Often, the QA systems lack mechanisms which help the system to take a decision on whether or not to answer, or prune the solution set further and pinpoint an exact match if it exists. Hence, the QA systems end up giving irrelevant response to input queries, which can be very annoying. This condition primarily arises as the similarity measures generally tend to weigh all words equally during the similarity matching stage.

Current mechanisms tend to cripple the systems performance, as a very strict matching mechanism tends to make the system only return an exact match while a lenient matching mechanism may lead to the machine to generalize the matching process and return irrelevant results.

**SUMMARY**

Disclosed herein is a method and a device for generating an optimized result set. The method involves retrieving solutions from one or more databases for one or more queries received from a user. Then, the retrieved solutions are ranked and the most relevant solutions are displayed to the user.

In an embodiment, a method for generating an optimized result set, comprising receiving, by a computing unit, one or more queries from a user, extracting at least one keyword from each of the one or more queries, retrieving a Relative Information Measure (RIM) value associated with each of the at least one keyword, calculating a normalized value for each of the retrieved RIM value associated with each of the at least one keyword, determining a score for a plurality of solutions based on the normalized value of each of the at least one keyword and the corresponding one or more keywords present in the plurality of solutions and generating a result set based on the score.

In this way, embodiments of the method described herein may be used to generate an optimized results set.

In an embodiment, the present disclosure presents a method for generating an optimized result set, comprising: receiving, by a computing unit, one or more queries from one or more users; extracting, by the computing unit, at least one keyword from each of the one or more queries; retrieving, by the computing unit, a Relative Information Measure (RIM) value associated with each of the at least one keyword, wherein the RIM value is determined using smoothened information gain for each of the at least one keyword; calculating, by the computing unit, a normalized value for each of the retrieved RIM value associated with each of the at least one keyword; determining, by the computing unit, a score for a plurality of solutions, based on the normalized value of each of the at least one keyword and the corresponding one or more keywords present in the plurality of solutions; and generating, by the computing unit, a result set based on the score.

In an embodiment, the result set comprises none or at least one solution among the plurality of solutions.

In an embodiment, the present disclosure presents a computing unit for generating an optimized result set, comprising a processor and a memory communicatively coupled to the processor, where the memory stores processor-executable instructions, which, on execution, causes the processor to receive one or more queries from a user, extract at least one keyword from each of the one or more queries, retrieve a Relative Information Measure (RIM) value associated with each of the at least one keyword, calculate a normalized value for each of the retrieved RIM value associated with each of the at least one keyword, determine a score for a plurality of solutions, based on the normalized value of each of the at least one keyword and the corresponding one or more keywords present in the plurality of solutions and generate a result set based on the score.

In an embodiment, the result set comprises none or at least one solution among the plurality of solutions.

In one embodiment, the present disclosure discloses a non-transitory computer readable medium including instructions stored thereon that when processed by at least one processor cause a device to perform operations comprising, receiving one or more queries from a user, extracting at least one keyword from each of the one or more queries, retrieving a Relative Information Measure (RIM) value associated with each of the at least one keyword, calculating a normalized value for each of the retrieved RIM value associated with each of the at least one keyword, determining a score for a plurality of solutions, based on the normalized value of each of the at least one keyword and the corresponding one or more keywords present in the plurality of solutions and generating a result set based on the score.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE ACCOMPANYING DRAWINGS

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:

Figure 1 shows a block diagram of a system for generating optimized result set in accordance with some embodiments of the present disclosure;

Figure 2 shows an exemplary block diagram of internal architecture of a computing unit for generating optimized result set in accordance with some embodiments of the present disclosure;

Figure 3 shows a system illustrating process flow for generating optimized result set in accordance with some embodiments of the present disclosure;

Figure 4 illustrates a flowchart showing method steps for generating optimized result set in accordance with some embodiments of the present disclosure; and

Figure 5 is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Embodiments of the present disclosure disclose a method and a device for generating an optimized result set. The device receives one or more queries from a user. Further, the device retrieves the most relevant solutions from one or more databases associated with the device, thereby reducing the number of irrelevant solutions.

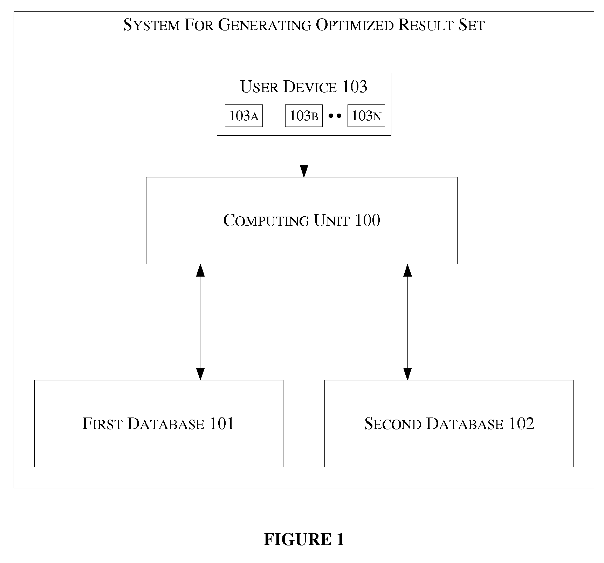

**Figure 1** of the present disclosure illustrates a system for generating an optimized result set. The system includes a computing unit 100, a first database 101 and a second database 102.

In an embodiment, the computing unit 100 receives one or more training inputs from a user device 103. User device 103A, user device 103B,..., user device 103N may be collectively represented as one or more user device 103. Here, the user device may be operated by a user. In an embodiment, the one or more training inputs may include queries, etc. Further, the computing unit 100 extracts pluralities of keywords from the one or more training inputs and stores the said plurality of keywords in the second first database 101. Furthermore, the computing unit 100 determines a Relative Information Measure (RIM) value for each of the plurality of keywords extracted from the one or more training inputs. The determined RIM value for each of the plurality of keywords may be represented as one or more RIM values hereafter in the present disclosure. The one or more RIM values corresponding to the plurality of keywords are stored in the first database 101. The one or more RIM values are then used in a process to generate an optimized result set.

In an embodiment, the computing unit 100 receives one or more queries from the one or more user devices 103. Further, the computing unit 100 extracts at least one keyword from each of the one or more queries. Then, the computing unit 100 retrieves the one or more RIM values corresponding to the at least one keyword from the first database 101. Furthermore, the computing unit 100 determines a score for a plurality of solutions stored in the second database 102, based on the one or more RIM values. In an embodiment, the plurality of solutions for the one or more queries may be generated by the computing unit 100 or any other devices associated with the second database 102. The plurality of solutions may be extracted from a central storage repository comprising a large number of solutions, based on the at least one keyword extracted from the one or more queries. Lastly, the computing unit 100 retrieves none or at least one solution amongst the plurality of solutions from the second database 102 based on the score determined for the plurality of solutions and displays the at least one solution to the user. In an embodiment, the first database 101 and the second database 102 may be connected to the computing unit 100 by one of a wired interface or wireless interface. In an embodiment, the computing unit 100 and the one or more user devices 103 may be one of but are not limited to Personal Digital Assistant (PDA), mobile phone, laptop, netbook, or any type of other computing devices.

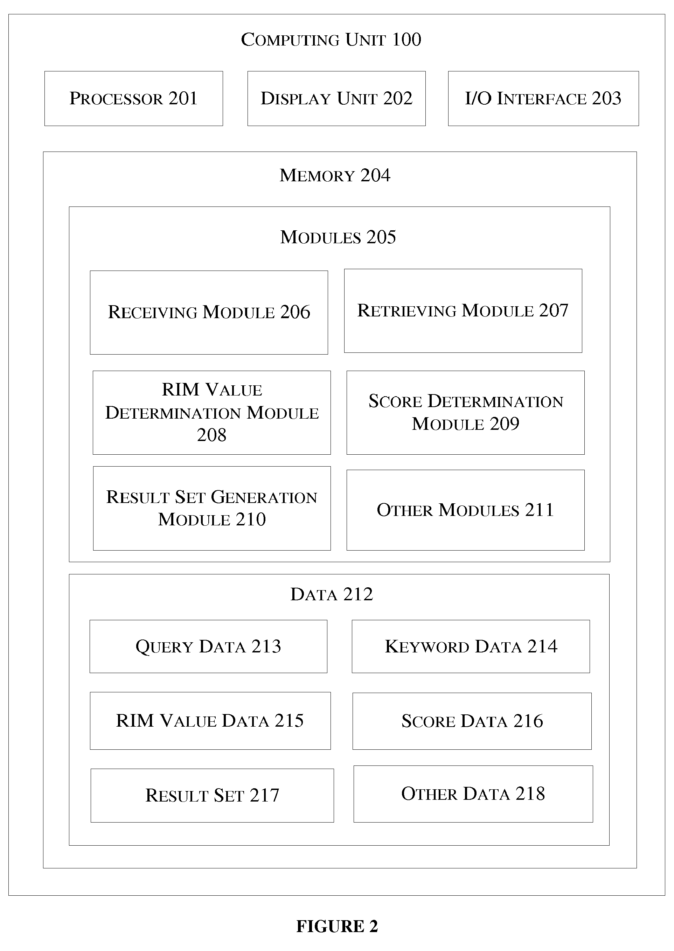

**Figure 2** of the present disclosure shows an exemplary block diagram of internal architecture the computing unit 100 for generating optimized result set in accordance with some embodiments of the present disclosure.

The computing unit 100 may include at least one central processing unit ("CPU" or "processor") 201 and a memory 204 storing instructions executable by the at least one processor 201. The processor 201 may comprise at least one data processor for executing program components for executing user or system-generated requests. A user may include a person, a person using a device such as those included in this disclosure, or such a device itself. The memory 204 is communicatively coupled to the processor 201. In an embodiment, the memory 204 stores one or more data 212. The computing unit 100 further comprises an Input/Output (I/O) interface 203. The I/O interface 203 is coupled with the processor 201 through which an input signal or/and an output signal is communicated. The computing unit 100 may also comprise a display unit 202 to display the at least one solution to the user.

In an embodiment, one or more data 212 may be stored within the memory 204. The one or more data 212 may include, for example, query data 213, keyword data 214, RIM value data 215, score data 215 and result set 217. The query data 213 may comprise one or more queries and can be represented as one or more queries 213 hereafter in the present disclosure. The keyword data may comprise one or more keywords and can be represented as at least one keyword 214 in the present disclosure. The RIM value data 215 may comprise one or more RIM values and can be represented as one or more RIM values 215 in the present disclosure. The score data 215 may comprise one or more scores and can be represented as one or more scores 216 in the present disclosure. Also, the one or more data 212 may comprise other data 218. The other data 218 may be used to store data, including temporary data and temporary files, generated by modules 205 for performing various functions of computing unit 100.

In one embodiment, the one or more queries 213 may be a question expressing doubt or requesting information. Examples of a query may be, "How to install OS", "How to reset a phone", "Tablet specifications", etc. The computing unit 100 receives the one or more queries 213 from the one or more user devices 103 through the I/O interface 203. Each of the one or more queries 213 is stored in the first database 101 upon reception by the computing unit 100. For every new one or more queries 213 received by the computing unit 100, the one or more queries 213 stored in the first database 100 acts as prior queries.

In one embodiment, the at least one keyword 214 is extracted from the one or more queries 213 input by the user. The processor 201 of the computing unit 100 may use extraction algorithms including, but not limited to, Lexical Chain algorithm, Bayes Classifier, Rapid Automation Keyword Extraction (RAKE), etc. The extracted at least one keyword 214 is stored in the first database 101. The processor 201 extracts the plurality of solutions based on the at least one keyword 214.

In an embodiment, the processor 201 calculates the one or more RIM values 215 for each of the at least one keyword 214. The one or more RIM values 215 is determined using smoothened information gain for each of the at least one keyword 214.

In an embodiment, the processor 201 calculates one or more scores 216 for the plurality of solutions stored in the second database 102. The one or more scores 216 determines confidence level or relevance level of each of the plurality of solutions for the one or more input queries 212.

In one embodiment, a result set 217 is generated based on the one or more scores 216 calculated for the plurality of solutions. The result set 217 is generated based on at least one of a comparison between the one or more scores 216 and a predefined threshold score of the one or more scores 216 and a predefined order of the score corresponding to the at least one solution. The result set comprises none or at least one solutions selected from the plurality of solutions.

In an embodiment, the one or more data 212 in the memory 204 is processed by modules 205 of the computing unit 100. The modules 205 may be stored within the memory 204. In an example, the modules 205, communicatively coupled with the processor 201, may also be present outside the memory 204. As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality.

In one implementation, the modules may include, for example, a receiving module 206, a retrieving module 207, a RIM value determination module 208, a score determination module 209, a result set generation module 210 and other modules 211. It will be appreciated that such aforementioned modules 205 may be represented as a single module or a combination of different modules.

In an embodiment, the receiving module 206 receives the one or more queries 213 from the one or more user devices 103. Also, the receiving module 206 receives the one or more training inputs from the one or more user devices 103. From the one or more training inputs, the processor 201 extracts plurality of keywords. The one or more queries 213 and the one or more training inputs are received through the Input/ Output (I/O) Interface 203 of the computing unit 100.

In an embodiment, the RIM value determination module 208 determines the one or more RIM values 215 for each of the plurality of keywords extracted from the training inputs and the said plurality of keywords are stored in the first database 101.

In one embodiment, the RIM value determination module 208 may remove non-American Standard Code for Information Interchange (ASCII) characters from the one or more training inputs and extract plurality of keywords from the one or more training inputs. The RIM value determination module 208 then uses Part-Of Speech (POS) tagging to categorize each of the plurality of keywords into predefined type of keyword. Here, the predefined type of keyword may be, but are not limited to nouns, adjectives, verbs, etc. Furthermore, the processor 201 determines the one or more RIM values 215 for each of the keywords categorized under each of the predefined type of keyword. The one or more RIM values 215 are based on smoothened information gain for each of the at least one keyword 214. The term "information gain" is preferably used herein as a quantitative measure of how relevant an attribute is. For instance, where the attribute is a keyword, and where the number of keywords is monitored, the information gain may provide a quantitative indication as to the relevance of the particular keyword. The term "smoothing" is preferably used in a mathematical sense and achieved by applying a function to the information gain data. In other words, smoothing the information gain data makes the data continuous. Here, the smoothened information gain is calculated based on occurrence ratio of total number of the at least one keyword and total number of prior queries stored in the first database 101, using the expression:

$$S = \log_2 (\text{Total number of the at least one keyword} / \text{Total number of prior queries})$$

$$\text{…........ (1)}$$

In equation 1, S denotes the smoothened information gain. The RIM value determination module 208 determines the one or more RIM values 215 by normalizing the smoothened information gain obtained using the above equation.

The RIM value 215 is a measure of relative information captured by a query in relation to potential solution. Further, the retrieving module 207 normalizes the extracted one or more RIM values 215 using the formula:

$$S_n = (S - S_{min}) / (S_{max} - S_{min}) \text{ …………………………………………………………... (2)}$$

Here, $S_n$ = Normalized value;
S = Smoothened information gain;
$S_{min}$ = Minimum value of Smoothened information gain; and
$S_{max}$ = Maximum value of Smoothened information gain.

Then, the normalized value of the one or more RIM values 215 is stored in the first database 101. The normalized value is used for generating an optimized result set 217.

In an embodiment, when the user inputs one or more queries 213, the receiving module 206 extracts the at least one keyword 214 from the one or more queries 213. Then, the retrieving module 207 retrieves the one or more RIM values 214 corresponding to the extracted at least one keyword 214 from the first database 101. In an embodiment, when the retrieving module 207 does not find the one or more RIM values 215 corresponding to the at least one keyword 214, the RIM value determination module 208 determines one or more RIM values 215 in real time using the equation 1 and stores the determined one or more RIM values 215 in the first database 101.

In an embodiment, the score determination module 209 determines one or more scores 216 for a plurality of solutions, based on the normalized value of each of the at least one keyword 214 and corresponding one or more keywords present in the plurality of solutions. The score determination module 209 receives the normalized value of the one or more RIM values 215 from the retrieving module 207 and the one or more keywords present in the plurality of solutions from the second database 102. Further, based on the number of the one or more keywords present in each of the plurality of solutions, the score determination module 209 determines a one or more scores 216 by aggregating the normalized value of the at least one keyword corresponding to the one or more keywords present in the plurality of solutions. The processor 201 uses machine learning algorithms to compare at least one keyword 214 and the one or more keywords in the plurality of solutions. The machine learning algorithm may be cosine similarity or any other algorithm for measuring similarity between two vector space models. Thereafter, the processor 201 generates an optimized result set based on the one or more scores 216 determined by the score determination module 209.

In an embodiment, the result set generation module 210 generates an optimized result set 217 based on the one or more scores 216 determined by the score determination module 209. The result set generation module 210 receives the one or more scores 216 from the score determination module 209. Further, the result set generation module 210 generates an optimized result set 217 by retrieving none or at least one solution from the plurality of solutions based on at least one of a comparison between the one or more scores 216 and a predefined threshold score of the one or more scores 216 and a predefined order of the one or more scores 216 corresponding to the at least one solution. In an embodiment, the result set 217 is generated based on comparison between the one or more scores 216 and the predefined threshold score of the one or more scores 216. In the present disclosure, the result set 217 is generated by retrieving at least one solution from the plurality of solutions having a one or more scores 216 above the predefined threshold score of the one or more scores 216. In an alternate embodiment, the result set generation module 210 retrieves predefined number of the plurality of solutions based on predefined order of the plurality of solutions stored in the second database 102. For example, the result set generation module 210 may retrieve top ten solutions from the plurality of solutions, when the plurality of solutions are stored in descending order of the scores 215 determined by the score determination module 209. In one implementation, the result set generation module 210 may not retrieve any solution from the plurality of solutions when the determined one or more scores 216 of the plurality of solutions does not exceed the predefined threshold score of the one or more scores 216.

In one embodiment the generated result set 217 is displayed to the user by the display unit 202 associated with the processor 201. In an embodiment, the processor 201 configures the display unit 202 to display a message to the user, when the result set 217 does not include at least one solution from the plurality of solutions.

In an embodiment, the memory 204 may also comprise other data 218 related to the one or more queries 213 for generating an optimized result set 217. In an embodiment, the memory 204 may also comprise other modules 211 to perform tasks for generating an optimized result set 217.

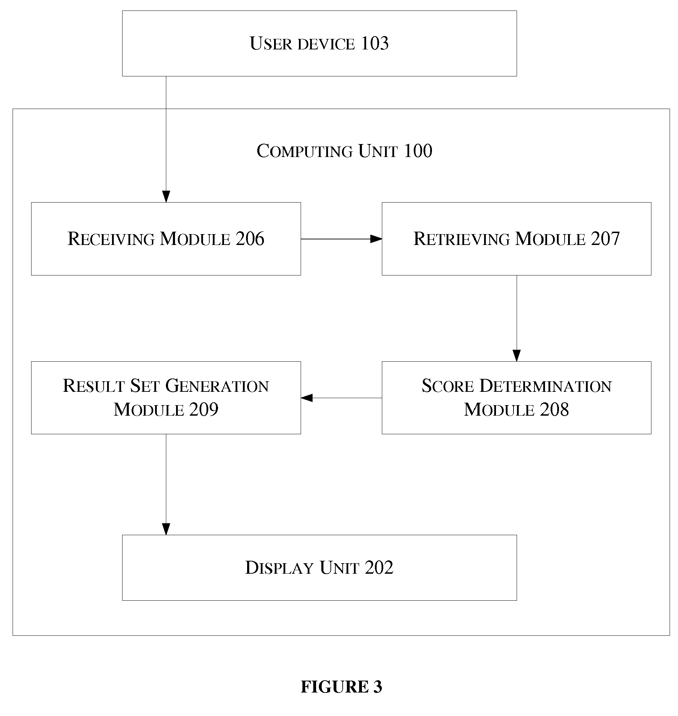

**Figure 3** of the present disclosure shows a system illustrating process flow for generating an optimized result set 217.

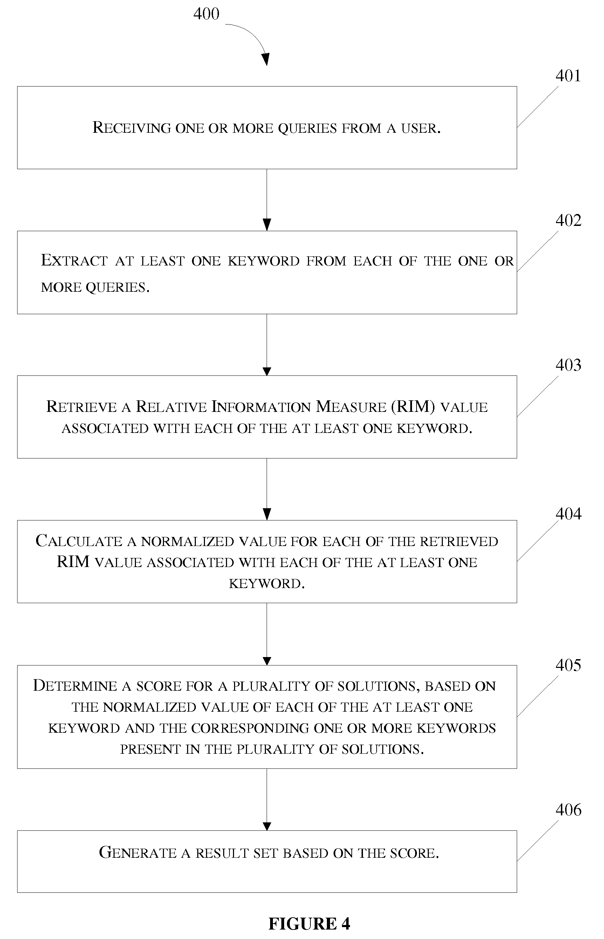

**Figure 4** shows a flowchart illustrating a method for generating an optimized result set 217 in accordance with some embodiments of the present disclosure.

As illustrated in **Figure 4,** the method 400 may comprise one or more steps for generating an optimized result set 217. The method 400 may be described in the general context of computer executable instructions. Generally, computer executable instructions can include routines, programs, objects, components, data structures, procedures, modules, and functions, which perform particular functions or implement particular abstract data types.

The order in which the method 400 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 401, receiving by the receiving module 206, the one or more queries 213 from the user. In an embodiment, the method also comprises receiving one or more training inputs from the one or more user devices 103.

At step 402, extracting by the receiving module 206, at least one keyword 214 from each of the one or more queries 213. Upon receiving the one or more queries 213, the receiving module 206 extracts at least one keyword 214. The at least one keyword 214 is stored in the first database 101. In an embodiment, the receiving module 206 also extracts the plurality of keywords from the one or more training inputs stored in the second database 102.

At step 403, retrieving by the retrieving module 207 the one or more RIM values 215 associated with each of the at least one keyword 213 from the first database 101. The one or more RIM values 215 determined by the RIM value determination module 208 are stored in the first database 101. Then, the retrieving module 207 retrieves the said one or more RIM values 215 corresponding to the at least one keyword 214. Here, the one or more RIM values 215 are calculated from smoothened information gain. The smoothened information gain is determined by the occurrence ratio of total number of the at least one keyword and total number of prior queries, using equation 1. Further, the RIM value determination module 208 normalizes the smoothened information gain and stores the result in the first database 101 as one or more RIM values 215. In this way, normalising the smoothened information gain produces the RIM values 215. Then, the retrieving module 207 retrieves the one or more RIM values 215 corresponding to the at least one keyword 214 extracted from the one or more queries 213. Also, the retrieving module 207 retrieves the one or more keywords present in the plurality of solutions from the second database 102.

At step 404, calculate by the score determination module 209, a normalized value for each of the one or more RIM values 215 associated with each of the at least one keyword 214. The score determination module 209 uses the equation 2 to normalize the one or more RIM values 215. Here, the aggregate value of each of the normalized value is less than or equal to 1. The normalized value is used to determine the one or more scores 216 to generate an optimized result set 217.

At step 405, determine the one or more scores 216 by the score determination module 209. The score determination module 209 determines the one or more scores 216 for plurality of solutions based on the normalized value of each of the at least one keyword 214 and corresponding one or more keywords present in the plurality of solutions. The score determination module 209 receives the one or more keywords present in the plurality of solutions from the second database 102 from the retrieving module 207. Further, based on the number of the one or more keywords present in each of the plurality of solutions, the score determination module 209 determines a one or more scores 216 by aggregating the normalized value of the at least one keyword 214, corresponding to the one or more keywords present in the plurality of solutions. Furthermore, the processor 201 generates an optimized result set 217 based on the one or more scores 216 determined by the score determination module 209.

At step 406, generate by the result set generation module 210, an optimized result set 217 based on the one or more scores 216 determined by the score determination module 209. The result set generation module 210 receives the one or more scores 216 from the score determination module 209. Further, the result set generation module 210 generates an optimized result set 217 by retrieving none or at least one solution from the plurality of solutions based on at least one of a comparison between the one or more scores 216 and a predefined threshold score of the one or more scores 216 and a predefined order of the one or more scores 216 corresponding to the at least one solution. In one implementation, the result set generation module 210 may not retrieve any solution from the plurality of solutions when the determined one or more scores 216 does not exceed the predefined threshold score of the one or more scores 216.

In an example, consider the following trainings inputs given to the computing unit 100:

1. Phone is not working.
2. Need to reset phone.
3. Camera not working.

The computing unit 100 extracts plurality of keyword from the above three training inputs. Let "Phone", "working", "reset" and "Camera" represent the keywords extracted from the three training inputs. The frequency of each of the keyword in the training inputs is as shown below:

Phone -2 times
Working - 2 times
Reset - 1 time
Camera - 1 time

Further, the computing unit 100 calculates the smoothened information gain for each of the extracted keywords using equation 1 of the present disclosure. The smoothened information gain values are as shown below:

$S_{(Phone)}$ - 0.176
$S_{(Working)}$ - 0.176
$S_{(Reset)}$ - 0.477
$S_{(Camera)}$ - 0.477

Then, the computing unit 100 normalizes the smoothened information gain values and stores the resulting value in the first database 101 as one or more RIM values 215. The one or more RIM values 215 are determined using equation 2 of the present disclosure. The determined one or more RIM values 215 for the smoothened information gain are represented below:

**Table 1**

| Keyword | $Sn_{(keyword)}$ |
|---------|------------------|
| Phone | 0.1875 |
| Reset | 0.125 |
| Working | 0.3507 |
| Camera | 0.1875 |

Let the input query 212 by the user be: "How to reset Phone". Now the computing unit 100 extracts at least one keyword 214 from the input query 212. Let "Phone" and "reset" represent the extracted keywords 213 from the input query 212. Then, the computing unit 100 retrieves the one or more RIM values 215 corresponding to the extracted keywords 213, from the first database 101. From **Table 1,** the one or more RIM values 215 corresponding to the keywords "Phone" and "reset" are 0.1875 and 0.125 respectively. Further, the computing unit 100 normalizes the one or more RIM values 215. The normalized one or more RIM values 215 are:

$Sn_{(Phone)}$ - 0.6
$Sn(reset)$ - 0.4

Further, the normalized value is used to determine the one or more scores 216. The below table illustrates the determination of the one or more scores 216 for the plurality of solutions.

**Table 2**

| Solutions | Keywords in Solutions | Score |
|-----------|----------------------|-------|
| Help me reset phone | Reset, Phone | 1 |
| How to activate phone | Phone | 0.6 |
| Issue with phone | Phone | 0.6 |
| How to reset my Camera | Reset | 0.4 |
| Reset my windows password | Reset | 0.4 |
| Activate my Camera | NA | 0 |

The computing unit 100 determines the one or more scores 216 for each of the plurality of solutions present in the second database 102. For each of the at least one keyword 214 extracted from the input query 213, the computing unit 100 identifies corresponding keyword from each of the plurality of solutions. Based on the identification and the normalized values, the one or more scores 216 is determined. From the **Table 2,** the first solution has two keywords, namely "phone" and "reset". Hence, the one or more scores 216 is determined by summing the normalized values of the corresponding keywords, i.e. one or more scores 216 for the first solution would be 06+0.4 = 1. Similarly, the one or more scores 216 is determined for each of the plurality of solutions as shown in the **Table 2.** Furthermore, the computing unit 100 generates an optimized result set 217 based on at least one of a comparison between the score and a predefined threshold score of the one or more scores 216 and a predefined order of the score corresponding to the at least one solution. In one implementation, let the predefined threshold score be set as 0.6. Therefore, from **Table 2,** the solutions with the score 216 equal to or higher than the predefined threshold score of 0.6 is retrieved by the computing unit 100. In another implementation, the computing unit 100 retrieves predefined number of the plurality of solutions based on the predefined order, said plurality of solutions are stored in the second database 102. Let, the computing unit 100 retrieve top 3 solutions from the plurality of solutions when the plurality of solutions are stored in descending order of the scores 215. From **Table 2,** the computing unit 100 retrieves the first three solutions from the top.

In one implementation, the result set generation module 210 may not retrieve any solution from the plurality of solutions when the determined one or more scores 216 does not exceed the predefined threshold score of the one or more scores 216.

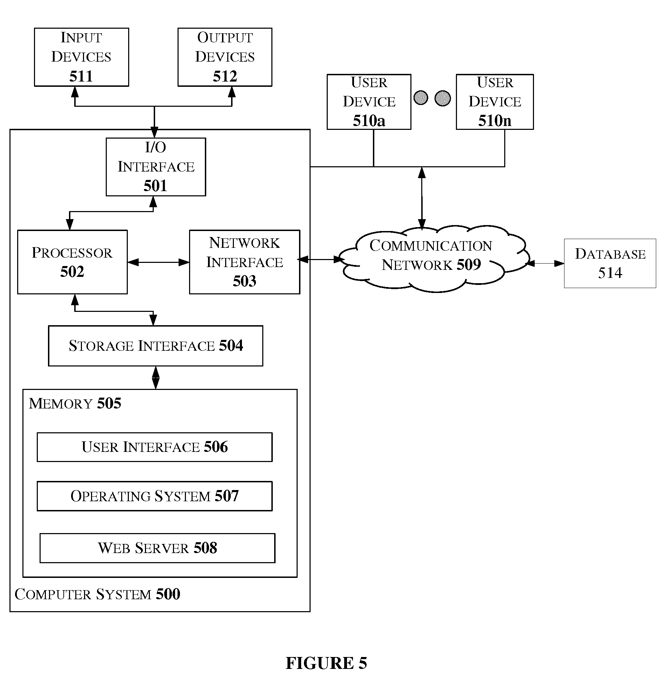

**Figure 5** illustrates a block diagram of an exemplary computer system 500 for implementing embodiments consistent with the present disclosure. In an embodiment, the computer system 500 is used to implement the method for generating an optimized result set. The computer system 500 may comprise a central processing unit ("CPU" or "processor") 502. The processor 502 may comprise at least one data processor for executing program components for dynamic resource allocation at run time. The processor 502 may include specialized processing units such as integrated system (bus) controllers, memory management control units, floating point units, graphics processing units, digital signal processing units, etc.

The processor 502 may be disposed in communication with one or more input/output (I/O) devices (not shown) via I/O interface 501. The I/O interface 501 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 501, the computer system 500 may communicate with one or more I/O devices. For example, the input device 511 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 512 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The computer system 500 may also include a User device 510. In addition, the computer system 500 may include an imaging device 513 (not shown).

In some embodiments, the computer system 500 is connected to the service operator through a communication network 509. The processor 502 may be disposed in communication with the communication network 509 via a network interface 503. The network interface 503 may communicate with the communication network 509. The network interface 503 may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network 509 may include, without limitation, a direct interconnection, e-commerce network, a peer to peer (P2P) network, local area network (LAN), wide area network (WAN), wireless network (e.g., using Wireless Application Protocol), the Internet, Wi-Fi, etc. Using the network interface 503 and the communication network 509, the computer system 500 may communicate with the one or more service operators.

In some embodiments, the processor 502 may be disposed in communication with a memory 505 (e.g., RAM, ROM, etc. not shown in **Figure 5**) via a storage interface 504. The storage interface 504 may connect to memory 505 including, without limitation, memory drives, removable disc drives, etc., employing connection protocols such as serial advanced technology attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 505 may store a collection of program or database 514 components, including, without limitation, user interface 506, an operating system 507, web server 508 etc. In some embodiments, computer system 500 may store user/application data 506, such as the data, variables, records, etc. as described in this disclosure. Such databases may be implemented as fault-tolerant, relational, scalable, secure databases such as Oracle or Sybase.

The operating system 507 may facilitate resource management and operation of the computer system 500. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, 10 etc.), Apple iOS, Google Android, Phone OS, or the like.

In some embodiments, the computer system 500 may implement a web browser 507 stored program component. The web browser 508 may be a hypertext viewing application, such as Microsoft Internet Explorer, Google Chrome, Mozilla Firefox, Apple Safari, etc. Secure web browsing may be provided using Secure Hypertext Transport Protocol (HTTPS), Secure Sockets Layer (SSL), Transport Layer Security (TLS), etc. Web browsers 508 may utilize facilities such as AJAX, DHTML, Adobe Flash, JavaScript, Java, Application Programming Interfaces (APIs), etc. In some embodiments, the computer system 500 may implement a mail server stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system 500 may implement a mail client stored program component. The mail client may be a mail viewing application, such as Apple Mail, Microsoft Entourage, Microsoft Outlook, Mozilla Thunderbird, etc.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 4** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

TECHNICAL ADVANTAGES OF THE PRESENT INVENTION:

In an embodiment, the present disclosure discloses a method and a device for generating an optimized result set.

In an embodiment, the method of the present disclosure displays the most relevant solutions to the user, thereby reducing the number of irrelevant solutions.

In an embodiment, the most relevant solutions displayed to the user is very high. In an embodiment, no result may be displayed when the retrieved solutions are not relevant to the input query. Thus, the device is very reliable and accurate.

In an embodiment, the device for generating an optimized result set can be integrated with existing systems to generate an optimized result set.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Claims**

**1.** A computer-implemented method for generating a result set, comprising:

receiving one or more queries from one or more users;
extracting at least one keyword from each of the one or more queries;
retrieving a Relative Information Measure value associated with each of the at least one keyword, wherein the Relative Information Measure value is determined using smoothened information gain for each of the at least one keyword;
calculating a normalized value for each of the retrieved Relative Information Measure value associated with each of the at least one keyword;
determining a score for a plurality of solutions, based on the normalized value of each of the at least one keyword and the corresponding one or more keywords present in the plurality of solutions; and
generating a result set based on the score.

2. The method as claimed in claim 1, wherein the smoothened information gain is calculated based on an occurrence ratio of total number of the at least one keyword and total number of prior queries.

3. The method as claimed in claim 2, wherein the smoothened information gain is normalized and stored in a first database, as the Relative Information Measure value.

4. The method as claimed in any preceding claim, wherein the plurality of solutions is retrieved based on the one or more queries, from a second database.

5. The method as claimed in any preceding claim, wherein the result set comprises at least one solution among the plurality of solutions.

6. The method as claimed in any preceding claim, wherein the result set is generated based on at least one of a comparison between the score and a predefined threshold score of the score and a predefined order of the score corresponding to the at least one solution.

7. The method as claimed in any preceding claim, wherein the result set is displayed to the one or more users using a display unit.

8. A computing unit for generating an optimized result set, comprising:

a processor; and
a memory communicatively coupled to the processor, wherein the memory stores processor-executable instructions, which, on execution, causes the processor to:

receive one or more queries from one or more users;
extract at least one keyword from each of the one or more queries;
retrieve a Relative Information Measure value associated with each of the at least one keyword, wherein the Relative Information Measure value is determined using smoothened information gain for each of the at least one keyword;
calculate a normalized value for each of the retrieved Relative Information Measure value associated with each of the at least one keyword;
determine a score for a plurality of solutions, based on the normalized value of each of the at least one keyword and the corresponding one or more keywords present in the plurality of solutions; and
generate a result set based on the score.

9. The computing unit as claimed in claim 8, wherein the smoothened information gain is calculated based on occurrence ratio of total number of the at least one keyword and total number of prior queries.

10. The computing unit as claimed in claim 9, wherein the smoothened information gain is normalized and stored in a first database accessible by the computing unit as the Relative Information Measure value.

11. The computing unit as claimed in any one of claims 8 to 10, wherein the plurality of solutions is retrieved based on the one or more queries, from a second database accessible by the computing unit.

12. The computing unit as claimed in any one of claims 8 to 11, wherein the result set comprises at least one solution among the plurality of solutions.

13. The computing unit as claimed in any one of claims 8 to 12, wherein the result set is generated based on at least one of a comparison between the score and a predefined threshold score of the score and a predefined order of the score corresponding to the at least one solution.

14. The computing unit as claimed in any one of claims 8 to 13, wherein the result set is displayed to the one or more users using a display unit associated with the computing unit.

15. A non-transitory computer readable medium including instructions stored thereon that when processed by at least one processor cause a device to perform the method as claimed in any one of claims 1 to 7.

SYSTEM FOR GENERATING OPTIMIZED RESULT SET

USER DEVICE 103

| 103A | 103B | •• | 103N |

COMPUTING UNIT 100

FIRST DATABASE 101

SECOND DATABASE 102

**FIGURE 1**

COMPUTING UNIT 100

| PROCESSOR 201 | DISPLAY UNIT 202 | I/O INTERFACE 203 |

MEMORY 204

MODULES 205

| RECEIVING MODULE 206 | RETRIEVING MODULE 207 |

| RIM VALUE DETERMINATION MODULE 208 | SCORE DETERMINATION MODULE 209 |

| RESULT SET GENERATION MODULE 210 | OTHER MODULES 211 |

DATA 212

| QUERY DATA 213 | KEYWORD DATA 214 |

| RIM VALUE DATA 215 | SCORE DATA 216 |

| RESULT SET 217 | OTHER DATA 218 |

**FIGURE 2**

USER DEVICE 103

COMPUTING UNIT 100

RECEIVING MODULE 206

RETRIEVING MODULE 207

RESULT SET GENERATION MODULE 209

SCORE DETERMINATION MODULE 208

DISPLAY UNIT 202

**FIGURE 3**

400

401

RECEIVING ONE OR MORE QUERIES FROM A USER.

402

EXTRACT AT LEAST ONE KEYWORD FROM EACH OF THE ONE OR MORE QUERIES.

403

RETRIEVE A RELATIVE INFORMATION MEASURE (RIM) VALUE ASSOCIATED WITH EACH OF THE AT LEAST ONE KEYWORD.

404

CALCULATE A NORMALIZED VALUE FOR EACH OF THE RETRIEVED RIM VALUE ASSOCIATED WITH EACH OF THE AT LEAST ONE KEYWORD.

405

DETERMINE A SCORE FOR A PLURALITY OF SOLUTIONS, BASED ON THE NORMALIZED VALUE OF EACH OF THE AT LEAST ONE KEYWORD AND THE CORRESPONDING ONE OR MORE KEYWORDS PRESENT IN THE PLURALITY OF SOLUTIONS.

406

GENERATE A RESULT SET BASED ON THE SCORE.

**FIGURE 4**

**FIGURE 5**

Europäisches
Patentamt

European
Patent Office

Office européen
des brevets

# EUROPEAN SEARCH REPORT

Application Number

EP 16 16 2500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/358890 A1 (CHEN YINGYU [CN] ET AL) 4 December 2014 (2014-12-04) <br> * paragraph [0003]; claim 1; figure 3 * <br> * paragraph [0044] * <br> * paragraph [0078] - paragraph [0080] * <br> * paragraph [0085] - paragraph [0087] * <br> ----- | 1-15 | INV. <br> G06F17/30 |
| X | EP 2 000 925 A1 (DEUTSCHE TELEKOM AG [DE]; UNIV BERLIN TECH [DE]) 10 December 2008 (2008-12-10) <br> * paragraph [0011] - paragraph [0015]; claim 1 * <br> * paragraph [0049] - paragraph [0051] * <br> ----- | 1-15 | |
| X | US 2014/250118 A1 (ADACHI NORITAKA [JP] ET AL) 4 September 2014 (2014-09-04) <br> * paragraph [0013] - paragraph [0014]; figure 1 * <br> * paragraph [0004] * <br> ----- | 1-15 | |

TECHNICAL FIELDS
SEARCHED (IPC)

G06F

The present search report has been drawn up for all claims

| Place of search | Date of completion of the search | Examiner |
|---|---|---|
| Munich | 30 June 2017 | Frank, Korbinian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 16 2500

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2017

| Patent document cited in search report | | Publication date | Patent family member(s) | | Publication date |
|---|---|---|---|---|---|
| US 2014358890 | A1 | 04-12-2014 | CN | 104216913 A | 17-12-2014 |
| | | | US | 2014358890 A1 | 04-12-2014 |
| EP 2000925 | A1 | 10-12-2008 | NONE | | |
| US 2014250118 | A1 | 04-09-2014 | CN | 103765418 A | 30-04-2014 |
| | | | DE | 112012003249 T5 | 22-05-2014 |
| | | | GB | 2508544 A | 04-06-2014 |
| | | | JP | 5911492 B2 | 27-04-2016 |
| | | | JP | WO2013021696 A1 | 05-03-2015 |
| | | | US | 2014250118 A1 | 04-09-2014 |
| | | | WO | 2013021696 A1 | 14-02-2013 |

EPO FORM P0459

For more details about this annex : see Official Journal of the European Patent Office, No. 12/82